# EUROPEAN PATENT SPECIFICATION

(11) **EP 3 295 681 B1**
(45) Date of publication and mention of the grant of the patent: **30.06.2021**
(21) Application number: 16724250.2
(22) Date of filing: 13.05.2016
(51) Int. Cl.: H04R 3/00, H04M 9/08, H04R 3/02

(54) **ACOUSTIC ECHO CANCELLING SYSTEM AND METHOD**
AKUSTISCHES ECHOKOMPENSATIONSSYSTEM UND VERFAHREN
SYSTÈME ET PROCÉDÉ D'ANNULATION D'ÉCHO ACOUSTIQUE

(30) Priority: 15.05.2015 US 201562162210 P
(43) Date of publication of application: 21.03.2018
(73) Proprietor: Harman International Industries, Inc., Stamford, CT 06901 (US)
(72) Inventor: MICHEL, Alan Dean, Carmel, Indiana 46032 (US); LI, Shengbo, Shenzhen Guangdong 518057 (CN); ADAIR, Brian, San Jose, California 94089 (US); SHANK, Kevin, Canoga Park, California 91303 (US)
(74) Representative: Westphal, Mussgnug Patentanwälte & Partner mbB
(86) International application number: PCT/US2016/032318
(87) International publication number: WO 2016/186997

(56) References cited:
- US-A- 4 670 903
- US-A1- 2006 188 089
- US-A1- 2008 132 295
- US-A1- 2008 205 665
- US-A1- 2014 056 435

## Description

### CROSS-REFERENCE TO RELATED APPLICATIONS

This application claims benefit of U.S. Provisional Serial No. 61/162,210, filed May 15, 2015.

### TECHNICAL FIELD

Aspects of the present disclosure provide for a system and a method for correcting for distortion, e.g., non-linear distortion, from an audio signal transducer in a linear echo cancellation system.

### BACKGROUND

Acoustic devices are used to project sound and send audio signals to remote devices to allow people to communicate with each other. Echoes and other unwanted signals can interfere with the quality of the acoustic signals being exchanged.

The sound from a loudspeaker can be reflected or coupled back to a microphone after some finite delay, producing an echo. In an ideal situation, the production of the echo (sound) which corresponds to the electrical signal in the apparatus is a linear process. The echo cancellation systems are considered linear systems and can remove distortion that is produced by linear processes. However, transducers, such as loudspeakers, may also create non-linear distortion. Linear echo cancellation systems have historically struggled with the problem of non-linear distortion and are unable to directly remove this distortion from the echo.

An overdriven amplifier causes nonlinear distortion by creating harmonics and intermodulation distortion from the clipping of large amplitude signals; see U.S. Pat. No. 4,809,336 (Pritchard). Publication US 2008/132295 A1 discloses an arrangement comprising a first microphone, a second microphone associated with a loudspeaker, as well as an echo canceller. The echo canceller receives as an input the signal sensed by the second microphone and provides an echo cancelling process to the signal of the first microphone. Enclosure vibration due to mechanical coupling between a loudspeaker and an enclosure, especially at lower voice frequencies, also causes significant nonlinear distortion that is picked up by the microphone. The loudspeaker itself is a major source of nonlinear distortion. The nonlinearities can be acoustic, electromagnetic, or mechanical, such as distortion of the cone or diaphragm or the voice coil traveling in non-uniform magnetic fields in the pole gaps or even hitting an end of travel mechanical constraint.

### SUMMARY

The invention is set out in the appended set of claims.

An audio device is described that can reduce the effects of nonlinear distortion and/or echo. The audio device includes the features of claim 1. The audio device may also include the features of claims 2-8.

Various methods are described to remove or reduce non-linear distortion. A non-linear distortion removal method includes the features of claim 9. The method may also include the features of claims 10-11.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompany drawings in which:
Figure 1 shows a schematic view of an audio system according to an embodiment;
Figure 2 shows a schematic view of an audio system according to an embodiment;
Figure 3 shows a communication system according to an embodiment;
Figure 4 shows a schematic view of an audio system according to an embodiment;
Figure 5 shows a schematic view of an audio system according to an embodiment;
Figure 6 shows a schematic view of an audio system according to an embodiment; and
Figure 7 shows graphs of waveforms produced using the present systems and methods.

### DETAILED DESCRIPTION

The present disclosure is provided in the context of the acoustic echo in loudspeaker-microphone systems which also implement echo cancellers.

As indicated, echo cancelling systems are generally not well suited to remove nonlinear distortion caused by a loudspeaker transducer particularly in compact, hands-free kits for cellphones and other mobile devices. Many of the problems associated with hands-free kits have been attributed to inexpensive, smaller loudspeakers. When such a loudspeaker is overdriven, saturation effects associated with the loudspeaker and its amplifier distort sound in a nonlinear manner. An acoustic echo of such sound contains a mixture of linear signal and nonlinear harmonic and intermodulation components. A typical acoustic echo canceller estimates only the linear acoustic impulse response of the loudspeaker-enclosure-room environment and microphone system. The remaining nonlinear components in the system can be large and audible when compared in level to the near end talker that is not as close to the microphone, particularly at high volume.

Detailed embodiments are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

The embodiments of the present disclosure generally provide for a plurality of circuits or other electrical devices. All references to the circuits and other electrical devices and the functionality provided by each, are not intended to be limited to encompassing only what is illustrated and described herein. While particular labels may be assigned to the various circuits or other electrical devices disclosed, such labels arc not intended to limit the scope of operation for the circuits and the other electrical devices. It is recognized that any circuit or other electrical device disclosed herein may include any number of microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof) and instructions (e.g., software) which co-act with one another to perform operation(s) disclosed herein. In addition, any one or more of the electric devices may be configured to execute a computer-program that is embodied in a computer readable medium that is programmed to perform any number of the functions and features as disclosed. The computer readable medium may be non-transitory or in any form readable by a machine or electrical component. For ease of description the various circuit elements may not be described in detail but are part of the structural elements described. Examples of structural elements that include circuitry include the echo canceller, microphones, filters, amplifiers and communication connection devices.

Aspects disclosed herein may decrease the effect of the distortions in the acoustic signal produced by a loudspeaker. Echo cancellers may operate to reduce the effect of the echo that occurs in the physical space of the loudspeaker. Echo cancellers work to learn the room acoustics system impulse response and remove predictable echoes, e.g., linear echoes, to improve the signal sent to a remote listener. However, loudspeakers may have non-linear distortions and echo cancellers cannot remove non-linear distortions using a linear system. Such non-linear distortions may further interfere with the training of the noise canceller or the echo canceller, causing its room impulse response estimation to diverge away from a quality solution if the echo canceller trains using the residual error signal that contains non-linear distortion.

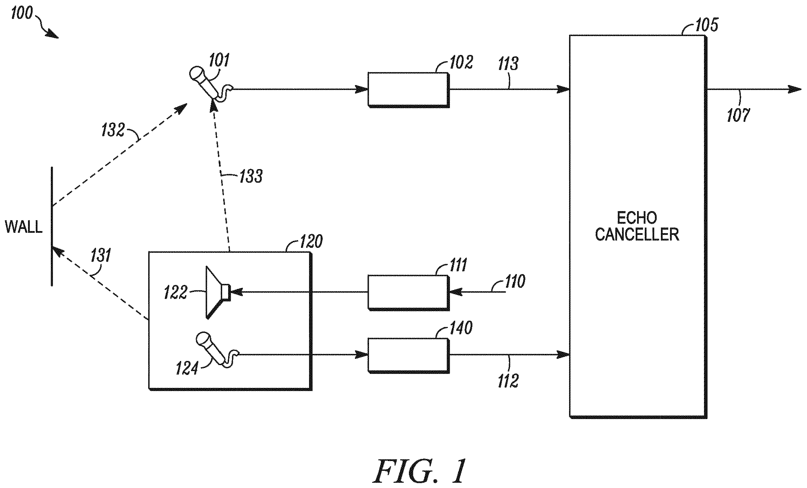

Figure 1 shows an audio system 100 that includes a microphone 101 is coupled through amplifier 102. The microphone 101 can have a high signal-to-noise ratio and be configured to sense acoustic signals, e.g., speech, music, or other human audible signals. Either the microphone 101 or the amplifier 102 includes an analog to digital converter circuit to convert the analog signal from the microphone into a digital signal. The output signal from amplifier 102 is sent to an echo canceller 105. The echo canceller 105 includes a "line out" terminal that sends a processed output signal 107 to further electronic devices in communication with the audio system 100. An input signal 110 is input into processing circuitry 111 to a loudspeaker assembly 120. The loudspeaker 122 converts the electrical signal to an acoustic signal that is output from the assembly 120 to the environment, e.g., along dashed lines 131 and 132 some of the acoustic signal from loudspeaker 122 is reflected back to external microphone 101 as an echo. Signal may also travel directly from loudspeaker 122 to external microphone 101 along a path shown as dashed line 133. The signal output from microphone 101 may include portions that are linear and nonlinear from the loudspeaker 122.

A digital representation of the signal from microphone 101 is coupled to the echo canceller 105.

The echo canceller 105 operates on both original far end sound and near end sound, which can include an echo. The echo canceller can now also reduce echo including non-linear distortion caused by the loudspeaker. Echo canceller can subtract the estimated echo derived from signal 112 from the near end signal 113. The echo component of near end signal 113 now only has echo that is linearly derivable from reference signal 112, in addition to the local original sound. Original sound can include, for example, near-end speech and background noise. "Near-end" refers to one end of a two channel communication link between two parties to a telephone call. "Far end" refers to conditions on the telephone lines, including "line out" and "line in," and signals from the telephone of the other party.

An example of an echo canceller system 105 is described in US Patent Publication No. 2014/0056435, and can be used with the presently described microphone associated with the loudspeaker.

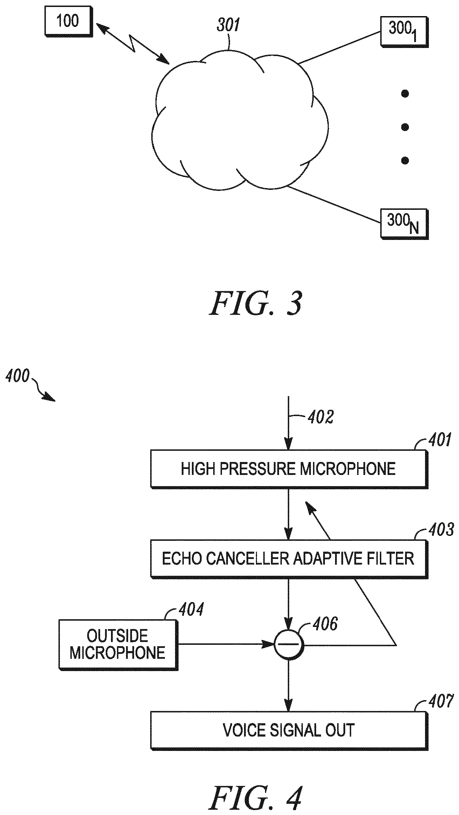

An echo canceller can have a plurality of states of operation. There may be four states: Idle (neither side is talking), Transmit (a user who is at the speakerphone or audio system 100 is talking), Receive (the person at the far end of the conversation is talking, e.g., a person at device 3001, see FIG. 3) and Double Talk (both people are actively talking at the same time). An echo canceller is trained only in the receive state. If distortion remains, which is not cancelled, will result in poor performance of the echo canceller. Similarly, training is not done in double talk state. With high levels of loudspeaker distortion, in traditional echo cancelling systems, it is difficult to distinguish between a receive state and a double talk state. Residual distortion makes it difficult to distinguish between a double talk state where training can cause convergence problems and even cause the echo canceler to diverge from the correct echo canceler impulse response, and receive state where training will allow echo canceler filter coefficients to converge to the correct values to match the echo impulse response of the transducer and room acoustics.

The microphone 124 is in the cavity with the loudspeaker 122. The microphone 124 is in the back cavity of the loudspeaker housing, e.g., adjacent the coil driving the loudspeaker cone. Preferably the microphone is mounted in the inside wall of the loudspeaker housing. The microphone 124 can be a high acoustic overload point microphone as it is adjacent the loudspeaker 122 and in the back cavity or loudspeaker enclosure. The microphone 124 must be able to operate in a high decibel environment in the loudspeaker back cavity or enclosure, where acoustic pressure is high. The microphone 124 is not sensitive to the environmental acoustics or the area, e.g., a room, as the sound power in the loudspeaker cavity is significantly greater than the sound power in the environment outside the loudspeaker cavity. The mass of the loudspeaker cone also provides some additional isolation between the outside and the inside of the loudspeaker enclosure or back cavity. The sound level in the loudspeaker cavity can be 160 dB SPL or more. The sound level in the loudspeaker cavity will be greater than the sound level from the loudspeaker in the room or the external environment.

The signal from the microphone 124 is sent to a signal processor 140, which can include an analog to digital converter and filters. The signal from the signal processor 140 can be fed to the echo canceller 105. Signal processor 140 can further amplify the signal. In an example, the signal processor of the canceller 105 can include a frequency or time domain adaptive filter, e.g., a finite impulse response (FIR) filter.

The signal form the microphone 124 now includes any non-linearities generated by loudspeaker 122 or any amplification of the signal to the loudspeaker by the signal processor 111.

Echo canceller 105 can include processing circuitry and can estimate the linear response of loudspeaker-enclosure-microphone assembly 120. Echo canceller 105 may model the linear acoustic impulse response because the signal from the microphone 124 is the already nonlinearly distorted signal. In a conventional acoustic echo canceller, an adaptive filter can only model the linear response of the system and, typically, does not model the nonlinear responses.

The loudspeaker 122 can produce non-linear distortions in the acoustic signal being generated from the signal input into the loudspeaker 122. The loudspeaker 122 can be an electroacoustic transducer and operates by converting an electrical audio signal into a corresponding sound from the loudspeaker. An alternating current electrical audio signal is applied through the voice coil; a coil of wire is suspended in a circular gap between the poles of a permanent magnet. The coil is forced to move rapidly back and forth due to Faraday's law of induction, which causes a diaphragm (e.g., a loudspeaker cone) attached to the coil to move back and forth thereby pushing on the air to create sound waves. Non-linear distortions can result from the magnetic field not being uniform in the gap. The more the coil moves out of the gap, the greater the change in the magnetic field, thus there are greater non-linearities when the coil moves to a greater extent. The non-linear distortions can be harmonic and intermodulation distortions. These non-linearities can be a function of the type of sound (speech, music and the like) being played and at what volume the sound is being played. These distortion components are very difficult to predict and are eliminated usually by using echo suppression, where the signal below a certain level is just significantly reduced with additional loss, or even zeroed out completely. Unfortunately, this can often distort near end talker signal as well.

While shown in FIG. 1 as a single loudspeaker assembly 120, the present disclosure is not so limited. There may be a plurality of loudspeaker assemblies 120, which each emitting sound from the loudspeaker 122 and sense a signal using the microphone 124. All of the signals may be sent to a unified echo canceller, e.g., canceller 105. In another example, a canceller may handle the signal processing for two or four loudspeaker assemblies. In another example, each microphone 124 feeds a signal to a dedicated canceller 105.

The signal energy levels of the receive signals, and the audio (external microphone) signal after the echo canceller has removed the predicted echo are compared, and a decision is made on which is the appropriate state the system should be in. This residual signal when in the receive state is also used to train the echo canceller, changing its filter coefficients to produce a better echo prediction, thus lowering the echo heard by the far end user.

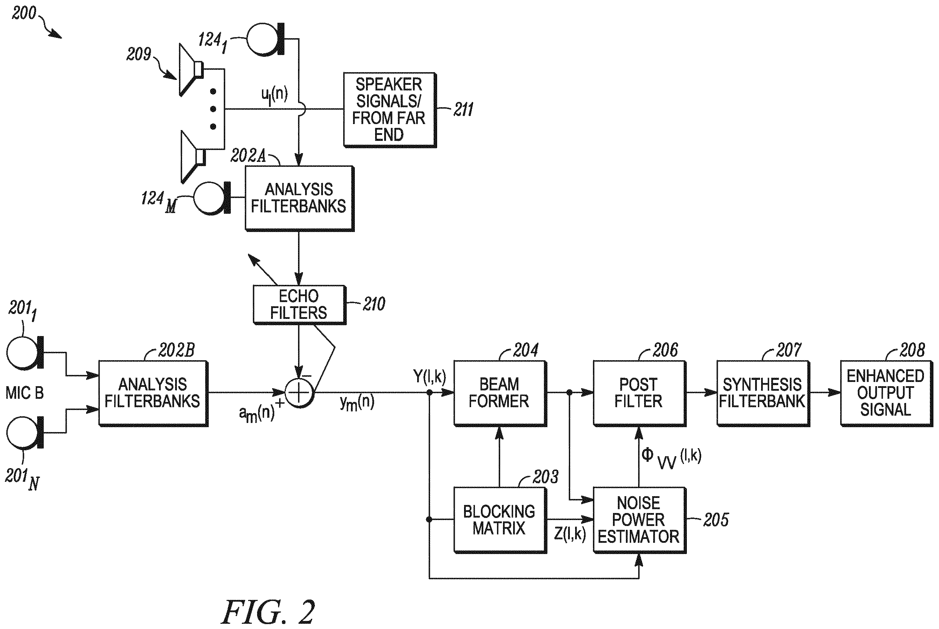

Figure 2 shows an audio system 200, which shows how the disclosed noise power estimator 205 may be embedded in a communication system with echo cancelling, beamforming, and noise reduction and can use a microphone 124 associated with a loudspeaker, e.g., in the loudspeaker cavity. A loudspeaker signal in one or more audio channels is available in digital form from an audio signal source 211, e.g., a signal from a far end talker or an audio signal from within the device, and is reproduced as an acoustical signal by one or more loudspeakers. A set of filterbanks 202A and 202B produces a time-frequency representation of each communication signal, which in an embodiment may be performed as a short time Fourier transform (STFT) to obtain coefficients. While shown as a single microphone 124 and single filter bank 202A, it is understood that there can be a plurality of microphones 124 and a plurality of filter banks 202A associated with the plurality of microphones 124, respectively. There can also be a plurality of analysis filter banks 202B associated with the microphones 124. A set of echo filters 210 adapted to match the acoustical echo transfer functions, filter the signal from the analysis filter bank 202 to obtain a noise/echo signal estimate for each of the M microphones 201, M>1 and each of S loudspeakers 209. In an example, one of the microphones can be a microphone in the loudspeaker cavity. The echo signal estimate is subtracted from the microphone signals to obtain M communication signals yₘ(n), m=1 ... M, where n is a discrete sample time index. In an embodiment, an analysis filterbank 202B processes microphone signal 201 (which can be multiple microphones, e.g., N external microphones) and the acoustical echo transfer functions are estimated in one or more sub-bands and the subsequent subtraction of the second signal at each microphone signal is performed in the sub-band domain. The signal from the summing circuit is used to control the echo (with non-linear distortion) filter 210 and the noise filter 206.

A blocking matrix B(l,k) 203 of dimensions M rows by N columns, where 1≦N<M is applied by the operation Z(l,k)=B^{H}(l,k)Y(l,k). The blocking matrix is designed to attenuate the target signal, while at the same time having a full rank, i.e. the N columns are linearly independent. The blocking matrix may in an embodiment be predetermined. In a further embodiment the blocking matrix can be adaptive, in order to track a target that changes position. An embodiment may use Eq.2 of US Patent Publication No. 2014/0056435 for calculating a blocking matrix. A beam former 204 processes the M communication signals to obtain an enhanced beam formed signal by means of a set of beam former weights w(l,k) so that Y_{w}(l,k)=w^{H}(l,k)Y(l,k). The beam former may in some embodiments have predetermined weights. In other embodiments the beam former may be adaptive. A common method is a Generalized Side lobe Canceller (GSC) structure where the blocking matrix signal Z(l,k) is adaptively filtered with coefficients q(1,k) and subtracted from a predetermined reference beam former w₀(k), to minimize the beam former output, e.g. w(l,k)=w₀(k)-B(l,k)q(l,k). The noise power estimator 205 provides an estimate {circumflex over (ϕ)}vv(l,k) of the power of the noise component of the enhanced beam formed signal. The noise power estimate is used by the post filter 206 to yield a time-frequency dependent gain g(1,k) which is applied to the enhanced beam formed signal. The gain may be derived by means of a gain function, e.g. as function of the estimated signal-to-noise-ratio (SNR) value ξ(l,k), as g(l,k)=G(ξ(l,k)), which in some embodiments can be a bounded Wiener filter to reduce audible artifacts. In some embodiments, other functions may contribute to or process the gain value, such as equalization, dynamic compression, feedback control, or a volume control. In an embodiment, the gain function is a bounded spectral subtraction rule. The estimated SNR value may in a further embodiment be derived from a decision-directed approach.

The post filter 206 outputs a time-frequency weighted signal X(l,k)=Y_{w}(l,k)g(l,k) to a synthesis filter bank 207 which produces an enhanced time domain signal where the target signal is preserved and noise signals are attenuated. The synthesis filter bank 207 may apply an overlap-sum scheme so that an enhanced output signal 208 is output. The enhanced signal 208 may in some embodiments be used for transmission to the remote part or remote device. In other embodiments, an automated speech recognition system or a voice control system may receive the signal for processing.

The microphone 124 may be used to control the training of the acoustic echo prediction filter bank 210 or the blocking matrix 203. For example, the signal from the microphone 124 can move the filter bank or blocking matrix to and from a training mode. Still further the signal from the microphone 124 can be used to capture both linear and non-linear components from the distortion of the loudspeaker output before the echo (or non-linearities_ is cancelled. The microphone 124 is adjacent the loudspeaker 209, e.g., in the same enclosure or in the back cavity adjacent the loudspeaker driver. The signal sensed by the microphone 124, as well as signals Y, determines when the system 200 is in a mode where the system 200 can be trained, e.g., update the blocking matrix 203 or the echo prediction filter 210.

While shown in FIG. 2 as a single pair of loudspeaker 209 and microphone 124, the present disclosure is not so limited. There may be a plurality of loudspeakers 209 and a single associated microphone 124 to sense a signal from the plurality of loudspeakers 209. The sensed signal may be sent directly to or preprocessed and then a unified noise/echo canceller, e.g., canceller 105. In another example, a canceller may handle the signal processing for two or four microphone 124, when there is a plurality of microphones 124. In another example, there is a dedicated microphone for each loudspeaker 209. Each microphone 124 feeds a signal to a dedicated canceller 105.

Figure 3 shows a communication system with the audio system 100 communication through a network 301 to at least one of a plurality of electronic communication device 300₁ - 300_{N}. The electronic communication device 300₁ - 300_{N} can be the same as the audio system 100 or can be traditional phones, cell phones, mobile communication devices. In an example, the devices 300 may be an IPhone by Apple Corp. of Cupertino, CA., a smartphone by Samsung Corp. of South Korea, a smartphone by ZTE Corp. of China or the like. The network 301 may be a global computer network, such as the Internet, a cellular communication network, local computer networks, the telephone network, the global Telex network, the aeronautical ACARS network or the like. The audio system 100 includes non-linear distortion correction as described herein and may include echo cancellation. The electronic communication device 300₁ - 300_{N} can be any device that uses electricity and has a communication adapter. The device 100 can use its ability to clean its input signal, e.g., remove or reduce echo and nonlinear distortion, and send control signals to the remote device 300₁ - 300_{N}. The remote devices 300₁ - 300_{N} can be audio playback device, video playback device, multi-media devices, home controls, vehicle controls, appliances and the like.

Figure 4 shows an audio system 400. A microphone 401 in the loudspeaker cavity receives a signal 402 in the cavity and sends a sensed signal to an echo canceller adaptive filter 403. The echo canceller 403 uses the signal to select the mode at which the system 400 is operating, e.g., any of Idle, Talk, Receive, or Double Talk. The echo canceller 403 only trains during the transmit mode to set its coefficients to remove linear distortions in the voice signal output 407. The signal from the high pressure microphone 401 is used as input to the adaptive echo canceller's predictive filter 403 that predicts the echo.

An outside microphone 404 picks up a voice signal with loudspeaker echoes, which it inputs into a summing circuit 406. The summing circuit 406 removes the linearly predicted echo from the voice signal from the outside microphone 404 and outputs the voice output signal 407. The output from the summing circuit may be used to control the echo canceller 403.

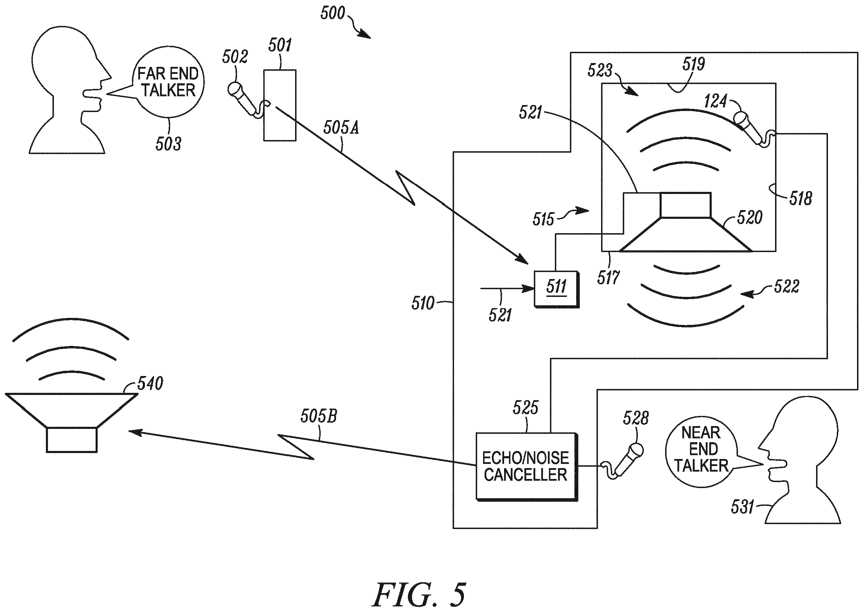

Figure 5 shows an audio system 500 with a far end communication device 501 and a near end communication device 510, which devices are in communication with each other. The communication device 501 includes microphone 502 that converts sound from the far end talker 503 into electrical signals. The communication device 501 sends the electronic audio signal to the near end communication device 510 over a communication link 505A. The communication link 505A can be analog or digital. The communication link 505A can include a network such as a computer network or a mobile telephony network. Communication device 510 processes the received audio signal in amplifier 511 and converts the signal to output a signal 521 from the loudspeaker assembly 515. The loudspeaker assembly 515 includes a housing 517 to define a loudspeaker cavity 518 in which is mounted a loudspeaker 520 and the microphone 124. The loudspeaker 520 receives the audio drive signal 521 from an audio source to output sound waves 522 from the loudspeaker 520 while creating internal sound pressure 523 within the housing 517. The audio source may be a codec, processor and memory within the device 510. In an example, the audio source may receive a streaming audio signal. The microphone 124 is adapted to sense the sound pressure from the internal sound 523, e.g., a standing wave with all points in the housing 517 being in phase. The microphone 124 can operate in a linear mode up to about 160 dB SPL. The microphone 124 outputs a sensed signal to other processing circuits in the communication device 510, e.g., an echo canceller 525. The echo canceller 525 can include circuitry, memory and a processor. The device 510 also includes a near-end microphone 528 that converts sound from the near end talker 531 into electrical signals. The echo canceller 525 uses the signal from the internal microphone 124 to either control the state of the echo canceller or remove echoes or other distortions from the sound input at the external microphone 528. The device 510 sends the signal from the near end talker, as processed by the device 510, over the communication link 505B. The communication links 505A, 505B can have separate channels for each direction of communication or may packetize the data and each pack may travel different paths to be rebuilt into the signal at the receiving device. The signal sent from the device 510 is reproduced at the far end at loudspeaker 540. The loudspeaker 540 can be a standalone loudspeaker or part of the device 501. The sound produced by the loudspeaker 540 will have the echoes cancelled using e.g., the signal from the cavity mounted microphone 124.

In an example operation of system 500, the far end talker 503 will say something. That utterance will be transferred, through the system (microphone 502, device 501, communication link 505A and circuitry of device 510), to the electrical signal driving the near end loudspeaker 520. The circuitry, e.g., amplifier 511, in the device 510 will provide linear signal to drive the near end loudspeaker 520. The near end loudspeaker 520 recreates that sound from the far end talker 503 and plays it out for the near end talker 531 to hear. The near end talker 531 will respond and this utterance will be picked up by the near end microphone 528 in front of the near end talker 531. The device 510 processes the signal and sends, through the communication link 505B, to the loudspeaker 540 at the far end loudspeaker 503. Unfortunately, the output from the loudspeaker 520 at the near end will also be picked up by the near end microphone 528 and would be sent to the far end talker 503 but for the echo canceller 525 and processing circuitry in the device 510. Absent this processing, the far end talker 503 will not only hear the near end talker 531 but to also hear his own voice, which has been delayed by the inherent nature of the system 500. This makes effective communication nearly impossible.

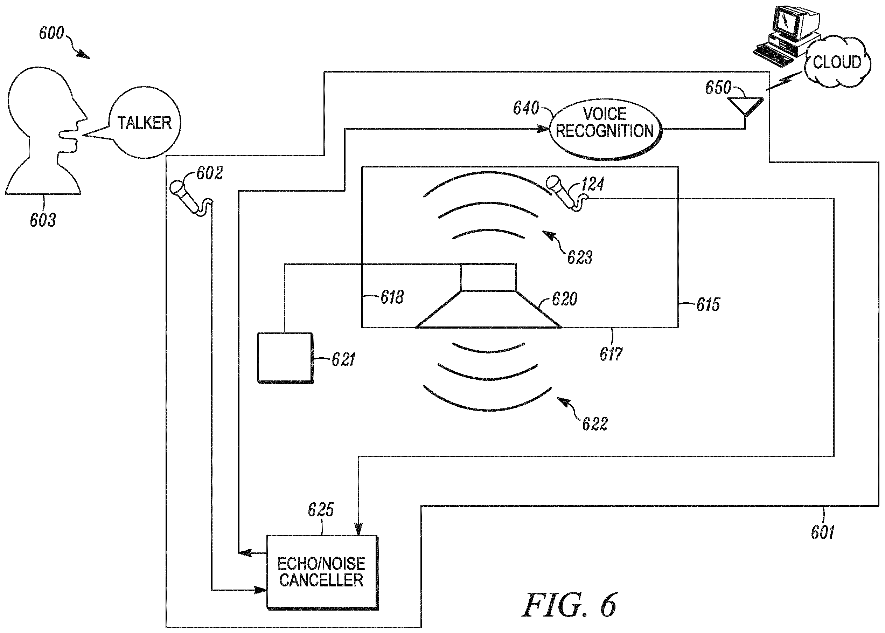

Figure 6 shows an audio system 600 with an audio device 601 with a microphone 602 that senses the speech of a talker 603. The device 601 includes a microphone 602 that converts sound from the talker 603 into electrical signals. The communication device 601 processes the audio signal from the microphone 602. The device 601 includes a loudspeaker assembly 615. The loudspeaker assembly 615 includes a housing 617 to define a loudspeaker cavity 618 in which is mounted a loudspeaker 620 and the microphone 124. The loudspeaker 620 receives an audio drive signal 621 from an audio source to output sound waves 622 from the loudspeaker 620 while creating internal sound waves 623 within the loudspeaker cavity 618. The microphone 124 is adapted to sense the sound pressure from the internal sound 623. The microphone 124 can operate in a linear mode up to about 160 dB SPL. The microphone 124 outputs a sensed signal to other processing circuits in the audio device 601, e.g., an echo canceller 625. The echo canceller 625 can include circuitry, memory and a processor. The echo canceller 625 can also receive the signal from the microphone 602.

The canceller 625 receives the signal from the microphone 124 and subtracts the signal from the loudspeaker, including the non-linear signal components from the signal from the microphone 602. The conditioned signal from the canceller 625 to the voice recognition circuit 640.

The device 601 also includes a voice recognition circuit 640 that receive the echo and non-linear distortion cancelled signal from canceller 625 that includes a signal from the microphone that is conditioned by the signal microphone 124. Thus, the signal at the voice recognition circuit 640 is a purer signal, e.g., reduced non-linear echo distortion and reduced echo. This will allow the voice recognition circuit 640 to operate better to recognize the actual spoken voice.

The device 601 can also include an input/output device 650, e.g., an antenna, hard wire, to allow the device 601 to communicate to another device connected to device 601 through the I/O device 650. The I/O device 650 can be connected to the cloud, e.g., a computer network. The voice recognized signal can be processed or stored in the cloud, e.g., a remote computer or memory. The voice recognized signal can be processed at a remote location, e.g., the SIRI service from Apple Corp. of Cupertino, CA. or Cortana from Microsoft Corp. of Redmond, WA. Such a voice recognized signal can be used to change operational modes of an audio device, control the music (change volume, change song/track, fast forward, rewind, and the like), request information, request directions for navigation, place telephone calls, send electronic messages and the like.

In an example scenario using system 600, the device 601 can be playing voice or music from the device loudspeaker 620. The user 603 will attempt to talk to the device 601 though microphone 602 in order to access some information or direct the device 601 to move to another mode or operation. Unlike the operation of the FIG. 5 example, the issue is not echo or echo cancellation but instead noise suppression or elimination. The loudspeaker 620 will be producing noise (e.g., like the FIG. 5 example) that will be a function of the linear drive signal and the non-linearities produced by that loudspeaker 620. These will look like noise to the microphone 602 that is designed to detect and recognize speech from the talker 603. Very often the loudspeaker (620) output is at a much higher level than the talker voice and will mask the signal from the talker.

The noise canceller 625 may rely on the loudspeaker drive signal 621 being subtracted out and may use a model of the non-linearities as well to suppress the non-linearities. However, this example runs into the same issues as in the FIG. 5 example with reproduction of the non-linearities and subtracting them from the intended talker signal. The microphone 124 operates to sense the signal from loudspeaker 620 in the cavity 618. This signal is sent from microphone 124 to the noise canceller 625, which subtracts the non-linearities as well as the linear portion of the loudspeaker signal. Thus, the voice recognition circuit 640 receives a cleaner input signal that is more representative of the talker's voice commands.

In an example, a loudspeaker with a microphone within the cavity of loudspeaker can be claimed for use with an echo canceller with the sensed signal from the loudspeaker microphone being used as the echo cancellor reference to move the non-linear distortion producing elements, to be placed before the echo canceller reference signal is obtained that is used to remove the echo from the audio signal, rather than after it.

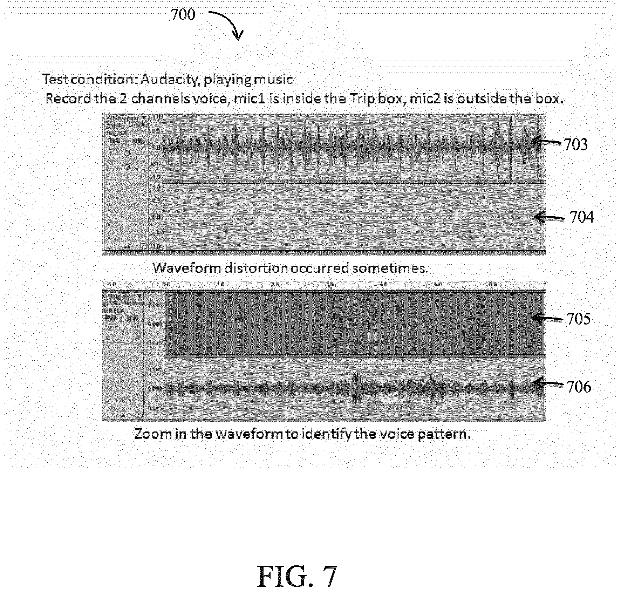

Figure 7 shows graphs produced according the present systems and methods described herein. A music recording test was performed on the present system. The Audacity software, an audio editor and recorder, was used to play music from the loud speaker. Two channels were recorded. FIG. 7 further shows an example of the operation of a high pressure microphone for the second microphone that is inside the loudspeaker's enclosure, e.g., a loudspeaker cavity, (top graph in FIG. 7). The bottom graph shows is the signals received by the external microphone. The internal microphone graph shows the sensed signal for music being played by the loudspeaker at 703 and the sensed voice signal at 704. The internal microphone cannot sense any of the voice signal due to the SPL inside the loudspeaker enclosure. The external microphone sense the sound emitted from the loudspeaker at 705 and the desired voice signal at 706. The loudspeaker cone is an acoustic volume velocity source driving two different acoustic load impedances, inside the loudspeaker enclosure and outside the loudspeaker enclosure. This results in different signals, which can be linearly related and non-linearly related (due to speaker effects) inside the loudspeaker enclosure relative to outside the loudspeaker enclosure. The impedance inside the enclosure is much higher, existing mainly as a result of the relatively small acoustic compliance, resulting in a much higher acoustic pressure. The impedance outside the enclosure is the real acoustic free air impedance, and much lower, so the acoustic pressure outside the enclosure is lower. However, both the acoustic signal in the enclosure and the signal outside the enclosure are linearly related by the impedance ratio of the acoustic impedance inside the enclosure to the acoustic impedance outside the enclosure. A local talker's voice would be picked up by the first, external microphone outside the loudspeaker enclosure, in addition to the far end talker's voice or music coming from the loudspeaker. The local talker's voice would not be picked up at the same level by the second, internal microphone within the loudspeaker enclosure.

The present disclosure describes the microphone being in a cavity in which a loudspeaker is mounted to emit sound waves from loudspeaker. The loudspeaker can be a sound transducer mounted in a housing, e.g., a mobile phone case, a box, a case and the like. The housing can form a substantially sealed air space back cavity acoustically coupled to the sound transducer. The back cavity can be defined by the loudspeaker cone and also contain the loudspeaker driver. The back cavity can be sealed, without ports. The back cavity may also include at least one port through the housing to the exterior of the housing, or possibly a passive radiator diaphragm.

The audio devices 100, 200 or 400 can also be used to allow automated human-to-machine voice command and control. The audio devices 100, 200, 300 or 400 can also play music. For example, music being played by the device 100, 200 or 400 may interfere with voice command and control. In human to human communications, audio from the far end talker may echo back from the loudspeaker of a device back into the microphone of the same device and go back to the far end talker with some delay, interfering with the far end talker's ability to communicate.

The audio devices 100, 200 or 400 can be used in a conference phone or loudspeaker phone, as well as rooms that have both loudspeakers and microphones, or other aidio systems. The devices can be a telephone that includes a microphone and loudspeaker in a sculptured case. The internal microphone is placed in the back cavity of the loudspeaker. The present description can be used with a hands-free kit for providing audio coupling to a cellphone or other mobile device such as tablets, netbooks, and portable computers. The audio systems 100, 200, 400 and 600 can also be used in vehicles.

The present inventors have discovered that prior echo cancelation systems can not accurately account for non-linear distortions, e.g., distortion in the loudspeaker. In some uses, distortion from the loudspeaker can actually be louder than the near end user's voice, e.g., a voice command, for use by a vehicle or other electronic system, which in turn creates problems in capturing the voice acoustic signal (e.g., a command) given that the microphones also captures the distortion from the loudspeaker. The distortion can thereby interfere with processing the user's voice acoustic signal. An example of the present disclosure includes a microphone, e.g., a high pressure microphone, in the back of a loudspeaker cavity to sense the distorted signal produced by the loudspeaker. That is, a microphone monitors the loudspeaker. The sensed signal plus any distortion can then be used in processing (e.g., circuitry, including processors and memory) to remove the loudspeaker output and its distortion. In an example, the signal from the microphone in the back cavity of the loudspeaker is fed into the adaptive filter. The received signal from a microphone inside the loudspeaker cavity, in conjunction with the output of the echo canceller's summer, can be used be used to decide what state the echo canceller is in and the original receive signal will no longer be fed into the adaptive filter.

The presently described systems and methods can also be used to allow automated human-to-machine voice command and control with improved echo cancellation. For example, music being played by the device may interfere with voice command and control. In human-to-human communications, audio from the far end talker may echo back from the loudspeaker of a device back into the microphone of the same device and go back to the far end talker with some delay, interfering with the far end talker's ability to communicate. The present disclosure improves the operation of both human-to-human communication and human-to-machine communication.

While exemplary embodiments are described above, it is not intended that these embodiments describe all possible forms of the invention. Rather, the words used in the specification are words of description rather than limitation, and it is understood that various changes may be made without departing from the scope of the invention. Additionally, the features of various implementing embodiments may be combined to form further embodiments of the invention.

## Claims

1. An audio device (100; 200), comprising:
a first microphone (101; 201) configured to produce a first signal;
a loudspeaker assembly including a loudspeaker enclosure, a loudspeaker (122; 209) associated with the loudspeaker enclosure and a second microphone (124) being a high-pressure microphone, wherein the second microphone (124) is configured to produce a second signal based on acoustic output from the loudspeaker (122; 209), wherein the loudspeaker enclosure includes a back cavity and wherein the second microphone (124) is positioned inside the back cavity within the interior of the loudspeaker enclosure and the first microphone (101; 201) is positioned outside of the back cavity;
a canceller (105) configured to receive the first signal and the second signal and configured to use the second signal as a reference signal canceller signal to reduce non-linear loudspeaker distortion as part of the first signal to produce an output signal; and
an adaptive filter configured to filter the second signal to produce an echo estimate, wherein the canceller (105) includes a summing circuit to subtract the echo estimate from the first signal,
wherein the canceller (105) further includes a first state with no signal being output from the loudspeaker (122; 209) and a no talk signal being sensed by the first microphone (101; 201), a second state with no signal being output from the loudspeaker (122; 209) and a talk signal is sensed by the first microphone (101; 201), a third state with the acoustic output being output from the loudspeaker (122; 209) and a talk signal being sensed by the first microphone (122; 209), and a fourth state with the acoustic output being output from the loudspeaker (122; 209) and the no talk signal being sensed by the first microphone (101; 201), and wherein the canceller (105) is trained in the fourth state to correct for linear distortion and for nonlinear distortion.

2. The device (100; 200) of claim 1, wherein the first microphone (101; 201) is further configured to sense an acoustic signal outside the device (100; 200).

3. The device (100; 200) of claim 2, wherein the first microphone (101; 201) is a high signal-to-noise microphone and wherein the second microphone (124) is a high pressure microphone.

4. The device (100; 200) of claim 2, wherein the canceller (105) is further configured to cancel an echo signal produced by the loudspeaker (122; 209) emitting the acoustic output that is at least partially sensed by the first microphone (101; 201); or wherein the canceller (105) includes an output to transmit the output signal outside the audio device (100; 200) to a communication network, another communication device, or both.

5. The device (100; 200) of claim 1, wherein the canceller (105) includes a blocking matrix (203) and a filter bank (207), both of which are trained, at least in part, using the second signal.

6. The device (200) of claim 1, wherein the loudspeaker assembly (200) includes a plurality of loudspeakers (209) and a plurality of second microphones (124) associated with the plurality of loudspeakers (209), respectively, and wherein the canceller includes multiple canceller circuits to receive signals from plurality of second microphones (124) and are configured to remove echo from loudspeaker acoustic outputs based on a plurality of the first signals from one or more of the first microphones.

7. The device (100; 200) of claim 1, wherein the canceller (105) outputs a canceller signal, which has echo as well as the non-linear distortion removed therefrom, to a voice recognition circuit that produces a voice recognized signal that can provide information control to another device, or control the audio device (100; 200).

8. The device (100; 200) of claim 7, wherein the first microphone (101; 201) is configured to sense a near talker to produce the first signal, and wherein the loudspeaker (122; 209) outputs an acoustic signal from a far talker received over a communication network.

9. A non-linear distortion removal method, comprising:
sensing a first acoustic signal at a first microphone (101; 201) remote from a loudspeaker (122; 209) of a loudspeaker assembly, wherein the microphone (101; 201) is positioned outside of a back cavity of a loudspeaker enclosure of the loudspeaker assembly;
sensing a second acoustic signal at the loudspeaker (122; 209) that contains non-linear loudspeaker distortion, wherein sensing the second acoustic signal at the loudspeaker (122; 209) includes sensing the second acoustic signal in the back cavity of the loudspeaker (122; 209) using a second microphone (124), which is a high pressure microphone and is positioned inside the back cavity of the loudspeaker (122; 209) within the interior of the loudspeaker enclosure;
receiving, by a canceller (105), the first acoustic signal and the second acoustic signal, wherein the second acoustic signal is used as a reference signal canceller signal to reduce non-linear loudspeaker distortion as part of the first signal to produce an output signal; and
removing any echo sensed by the microphone (101; 201) remote from the loudspeaker (122; 209) by subtracting, by a summing circuit of the canceller (105), an echo estimate from the first signal, wherein the echo estimate is produced by filtering, by an adaptive filter, the second acoustic signal,
wherein the canceller (105) further includes a first state with no signal being output from the loudspeaker (122; 209) and a no talk signal being sensed by the first microphone (101; 201), a second state with no signal being output from the loudspeaker (122; 209) and a talk signal is sensed by the first microphone (101; 201), a third state with the acoustic output being output from the loudspeaker (122; 209) and a talk signal being sensed by the first microphone (122; 209), and a fourth state with the acoustic output being output from the loudspeaker (122; 209) and the no talk signal being sensed by the first microphone (101; 201), and
wherein the method further comprises:
training the canceller (105) in the fourth state to correct for linear distortion and for nonlinear distortion.

10. The method of claim 9, wherein sensing the second acoustic signal includes training an echo filter (210) and a blocking matrix (203) of the canceller (105) using the sensed second acoustic signal from inside a loudspeaker enclosure; and enhancing the output signal using the echo filter (210) and the blocking matrix (203) to remove echo including non-linear loudspeaker distortion from the sensed first acoustic signal.

11. The method of claim 10, further comprising:
training the acoustic echo filter using the sensed second acoustic signal from inside the loudspeaker (122; 209) enclosure as a training signal;
filtering a speaker signal using the echo filter (210) to produce a filtered signal,
summing the filtered signal with the sensed first acoustic signal after filtering with an analysis filter bank to produce a summed signal with the echo removed,
applying a blocking matrix (203) on the summed signal to produce a blocking matrix output;
applying a beam former (204) to the summed signal and the blocking matrix output to produce a beam former output;
estimating the noise power using the summed signal, the blocking matrix output, and the beam former output;
post filtering the beam former output using the estimated noise power to produce a post filter signal; and
applying a synthesis filter to the post filter signal to produce an enhanced output signal.

## Patentansprüche

1. Audiovorrichtung (100; 200), die Folgendes umfasst:
ein erstes Mikrofon (101; 201), das dazu konfiguriert ist, ein erstes Signal zu erzeugen;
eine Lautsprecherbaugruppe, die ein Lautsprechergehäuse, einen mit dem Lautsprechergehäuse verbundenen Lautsprecher (122; 209) und ein zweites Mikrofon (124), das ein Hochdruckmikrofon ist, beinhaltet, wobei das zweite Mikrofon (124) dazu konfiguriert ist, ein zweites Signal auf Grundlage einer akustischen Ausgabe von dem Lautsprecher (122; 209) zu erzeugen, wobei das Lautsprechergehäuse einen rückseitigen Hohlraum beinhaltet und wobei das zweite Mikrofon (124) innerhalb des rückseitigen Hohlraums innerhalb des Innenraums des Lautsprechergehäuses positioniert ist und das erste Mikrofon (101; 201) außerhalb des rückseitigen Hohlraums positioniert ist;
einen Kompensator (105), der dazu konfiguriert ist, das erste Signal und das zweite Signal zu empfangen, und dazu konfiguriert ist, das zweite Signal als ein Referenzsignal-Kompensatorsignal zu verwenden, um eine nicht-lineare Lautsprecherverzerrung als Teil des ersten Signals zu reduzieren, um ein Ausgangssignal zu erzeugen; und
ein adaptives Filter, das dazu konfiguriert ist, das zweite Signal zu filtern, um eine Echoschätzung zu erzeugen, wobei der Kompensator (105) eine Summierungsschaltung beinhaltet, um die Echoschätzung von dem ersten Signal zu subtrahieren,
wobei der Kompensator (105) ferner einen ersten Zustand, bei dem kein Signal von dem Lautsprecher (122; 209) ausgegeben wird und kein Sprechsignal durch das erste Mikrofon (101; 201) erfasst wird, einen zweiten Zustand, bei dem kein Signal von dem Lautsprecher (122; 209) ausgegeben wird und ein Sprechsignal durch das erste Mikrofon (101; 201) erfasst wird, einen dritten Zustand, bei dem die akustische Ausgabe von dem Lautsprecher (122; 209) ausgegeben wird und ein Sprechsignal durch das erste Mikrofon (122; 209) erfasst wird, und einen vierten Zustand, bei dem die akustische Ausgabe von dem Lautsprecher (122; 209) ausgeben wird und kein Sprechsignal durch das erste Mikrofon (101; 201) erfasst wird, beinhaltet, und wobei der Kompensator (105) in dem vierten Zustand dazu trainiert ist, lineare Verzerrung und nicht-lineare Verzerrung zu korrigieren.

2. Vorrichtung (100; 200) nach Anspruch 1, wobei das erste Mikrofon (101; 201) ferner dazu konfiguriert ist, ein akustisches Signal außerhalb der Vorrichtung (100; 200) zu erfassen.

3. Vorrichtung (100; 200) nach Anspruch 2, wobei das erste Mikrofon (101; 201) ein starkes Signal-Rausch-Mikrofon ist und wobei das zweite Mikrofon (124) ein Hochdruckmikrofon ist.

4. Vorrichtung (100; 200) nach Anspruch 2, wobei der Kompensator (105) ferner dazu konfiguriert ist, ein Echosignal zu kompensieren, das durch den Lautsprecher (122; 209) erzeugt wird, der die akustische Ausgabe, die zumindest teilweise durch das erste Mikrofon (101; 201) erfasst wird, emittiert; oder wobei der Kompensator (105) einen Ausgang beinhaltet, um das Ausgangsignal außerhalb der Audiovorrichtung (100; 200) an ein Kommunikationsnetzwerk, eine weitere Kommunikationsvorrichtung oder beide zu übertragen.

5. Vorrichtung (100; 200) nach Anspruch 1, wobei der Kompensator (105) eine blockierende Matrix (203) und eine Filterbank (207) beinhaltet, die beide zumindest teilweise unter Verwendung des zweiten Signals trainiert sind.

6. Vorrichtung (200) nach Anspruch 1, wobei die Lautsprecherbaugruppe (200) eine Vielzahl von Lautsprechern (209) und eine Vielzahl von zweiten Mikrofonen (124), die jeweils mit der Vielzahl von Lautsprechern (209) verbunden ist, beinhaltet und wobei der Kompensator mehrere Kompensatorschaltungen beinhaltet, um Signale von der Vielzahl von zweiten Mikrofonen (124) zu empfangen, und die dazu konfiguriert sind, Echo aus den akustischen Ausgaben des Lautsprechers auf Grundlage einer Vielzahl von ersten Signalen von einem oder mehreren der ersten Mikrofone zu entfernen.

7. Vorrichtung (100; 200) nach Anspruch 1, wobei der Kompensator (105) ein Kompensatorsignal, das ein Echo sowie die daraus entfernte nicht-lineare Verzerrung aufweist, an eine Spracherkennungsschaltung ausgibt, die ein Spracherkennungssignal erzeugt, das einer weiteren Vorrichtung eine Informationssteuerung bereitstellen oder die Audiovorrichtung (100; 200) steuern kann.

8. Vorrichtung (100; 200) nach Anspruch 7, wobei das erste Mikrofon (101; 201) dazu konfiguriert ist, einen nahen Sprecher zu erfassen, um das erste Signal zu erzeugen, und wobei der Lautsprecher (122; 209) ein akustisches Signal von einem entfernten Sprecher, das über ein Kommunikationsnetzwerk empfangen wird, ausgibt.

9. Verfahren zum Entfernen einer nicht-linearen Verzerrung, das Folgendes umfasst:
Erfassen eines ersten akustischen Signals an einem ersten Mikrofon (101; 201) entfernt von einem Lautsprecher (122; 209) einer Lautsprecherbaugruppe, wobei das Mikrofon (101; 201) außerhalb eines rückseitigen Hohlraums eines Lautsprechergehäuses der Lautsprecherbaugruppe positioniert ist;
Erfassen eines zweiten akustischen Signals an dem Lautsprecher (122; 209), das eine nicht-lineare Lautsprecherverzerrung enthält, wobei das Erfassen des zweiten akustischen Signals an dem Lautsprecher (122; 209) ein Erfassen des akustischen Signals in dem rückseitigen Hohlraum des Lautsprechers (122; 209) unter Verwendung eines zweiten Mikrofons (124) beinhaltet, das ein Hochdruckmikrofon ist und innerhalb des rückseitigen Hohlraums des Lautsprechers (122; 209) innerhalb des Innenraums des Lautsprechergehäuses positioniert ist;
Empfangen des ersten akustischen Signals und des zweiten akustischen Signals durch einen Kompensator (105), wobei das zweite akustische Signal als ein Referenzsignal-Kompensatorsignal verwendet wird, um eine nicht-lineare Lautsprecherverzerrung als Teil des ersten Signals zu reduzieren, um ein Ausgangssignal zu erzeugen; und
Entfernen jeglichen Echos, das durch das Mikrofon (101; 201) entfernt von dem Lautsprecher (122; 209) erfasst wird, durch Subtrahieren einer Echoschätzung von dem ersten Signal durch eine Summierungsschaltung des Kompensators (105), wobei die Echoschätzung durch Filtern des zweiten akustischen Signals durch ein adaptives Filter erzeugt wird,
wobei der Kompensator (105) ferner einen ersten Zustand, bei dem kein Signal von dem Lautsprecher (122; 209) ausgegeben wird und kein Sprechsignal durch das erste Mikrofon (101; 201) erfasst wird, einen zweiten Zustand, bei dem kein Signal von dem Lautsprecher (122; 209) ausgegeben wird und ein Sprechsignal durch das erste Mikrofon (101; 201) erfasst wird, einen dritten Zustand, bei dem die akustische Ausgabe von dem Lautsprecher (122; 209) ausgegeben wird und ein Sprechsignal durch das erste Mikrofon (122; 209) erfasst wird, und einen vierten Zustand, bei dem die akustische Ausgabe von dem Lautsprecher (122; 209) ausgeben wird und kein Sprechsignal durch das erste Mikrofon (101; 201) erfasst wird, beinhaltet; und
wobei das Verfahren ferner Folgendes umfasst:
Trainieren des Kompensators (105) in dem vierten Zustand, um lineare Verzerrung und nicht-lineare Verzerrung zu korrigieren.

10. Verfahren nach Anspruch 9, wobei das Erfassen des zweiten akustischen Signals ein Trainieren eines Echofilters (210) und einer blockierenden Matrix (203) des Kompensators (105) unter Verwendung des erfassten zweiten akustischen Signals von innerhalb eines Lautsprechergehäuses beinhaltet; und Verbessern des Ausgangssignals unter Verwendung des Echofilters (210) und der blockierenden Matrix (203), um Echo einschließlich nicht-linearer Lautsprecherverzerrung von dem erfassten ersten akustischen Signal zu entfernen.

11. Verfahren nach Anspruch 10, das ferner Folgendes umfasst:
Trainieren des akustischen Echofilters unter Verwendung des erfassten zweiten akustischen Signals von innerhalb des Gehäuses des Lautsprechers (122; 209) als ein Trainingssignal;
Filtern eines Sprechersignals unter Verwendung des Echofilters (210), um ein gefiltertes Signal zu erzeugen,
Summieren des gefilterten Signals mit dem erfassten ersten akustischen Signal nach Filtern mit einer Analysefilterbank, um ein summiertes Signal mit entferntem Echo zu erzeugen,
Anwenden einer blockierenden Matrix (203) an dem summierten Signal, um eine Ausgabe der blockierenden Matrix zu erzeugen;
Anwenden eines Stahlformers (204) an dem summierten Signal und der Ausgabe der blockierenden Matrix, um eine Strahlformerausgabe zu erzeugen;
Schätzen der Rauschleistung unter Verwendung des summierten Signals, der Ausgabe der blockierenden Matrix und der Strahlformerausgabe;
Nachfiltern der Strahlformerausgabe unter Verwendung der geschätzten Rauschleistung, um ein Nachfiltersignal zu erzeugen; und
Anwenden eines Synthesefilters an dem Nachfiltersignal, um ein verbessertes Ausgangssignal zu erzeugen.

## Revendications

1. Dispositif audio (100 ; 200), comprenant :
un premier microphone (101 ; 201) conçu pour produire un premier signal ;
un ensemble haut-parleur comportant une enceinte de haut-parleur, un haut-parleur (122 ; 209) associé à l'enceinte de haut-parleur et un second microphone (124) étant un microphone haute pression, dans lequel le second microphone (124) est conçu pour produire un second signal basé sur une sortie acoustique provenant du haut-parleur (122 ; 209), dans lequel l'enceinte de haut-parleur comporte une cavité arrière et dans lequel le second microphone (124) est positionné à l'intérieur de la cavité arrière à l'intérieur de l'enceinte de haut-parleur et le premier microphone (101 ; 201) est positionné à l'extérieur de la cavité arrière ;
un annuleur (105) conçu pour recevoir le premier signal et le second signal et conçu pour utiliser le second signal comme signal d'annuleur de signal de référence pour réduire une distorsion non linéaire du haut-parleur en tant que partie du premier signal afin de produire un signal de sortie ; et
un filtre adaptatif conçu pour filtrer le second signal afin de produire une estimation d'écho, dans lequel l'annuleur (105) comporte un circuit d'addition pour soustraire l'estimation d'écho du premier signal,
dans lequel l'annuleur (105) comporte en outre un premier état sans signal sortant du haut-parleur (122 ; 209) et un signal de non-conversation étant détecté par le premier microphone (101 ; 201), un deuxième état sans signal sortant du haut-parleur (122 ; 209) et un signal de conversation est détecté par le premier microphone (101 ; 201), un troisième état avec la sortie acoustique provenant du haut-parleur (122 ; 209) et un signal de conversation étant détecté par le premier microphone (122 ; 209), et un quatrième état avec la sortie acoustique provenant du haut-parleur (122 ; 209) et le signal de non-conversation étant détecté par le premier microphone (101 ; 201), et dans lequel l'annuleur (105) apprend dans le quatrième état à corriger la distorsion linéaire et la distorsion non linéaire.

2. Dispositif (100 ; 200) selon la revendication 1, dans lequel le premier microphone (101 ; 201) est en outre conçu pour détecter un signal acoustique à l'extérieur du dispositif (100 ; 200) .

3. Dispositif (100 ; 200) selon la revendication 2, dans lequel le premier microphone (101 ; 201) est un microphone à signal sur bruit élevé et dans lequel le second microphone (124) est un microphone haute pression.

4. Dispositif (100 ; 200) selon la revendication 2, dans lequel l'annuleur (105) est en outre conçu pour annuler un signal d'écho produit par le haut-parleur (122 ; 209) émettant la sortie acoustique qui est au moins partiellement détectée par le premier microphone (101 ; 201) ; ou dans lequel l'annuleur (105) comporte une sortie pour transmettre le signal de sortie à l'extérieur du dispositif audio (100 ; 200) vers un réseau de communication, vers un autre dispositif de communication, ou vers les deux.

5. Dispositif (100 ; 200) selon la revendication 1, dans lequel l'annuleur (105) comporte une matrice de blocage (203) et un banc de filtres (207), tous deux apprenant, au moins en partie, en utilisant le second signal.

6. Dispositif (200) selon la revendication 1, dans lequel l'ensemble haut-parleur (200) comporte une pluralité de haut-parleurs (209) et une pluralité de seconds microphones (124) associés à la pluralité de haut-parleurs (209), respectivement, et dans lequel l'annuleur comporte plusieurs circuits d'annuleur destinés à recevoir des signaux provenant d'une pluralité de seconds microphones (124) et conçus pour supprimer l'écho des sorties acoustiques de haut-parleur sur la base d'une pluralité des premiers signaux provenant d'un ou de plusieurs des premiers microphones.

7. Dispositif (100 ; 200) selon la revendication 1, dans lequel l'annuleur (105) transmet un signal d'annuleur, duquel l'écho ainsi que la distorsion non linéaire sont supprimés, à un circuit de reconnaissance vocale qui produit un signal vocal reconnu qui peut fournir une commande d'informations à un autre dispositif, ou commander le dispositif audio (100 ; 200).

8. Dispositif (100 ; 200) selon la revendication 7, dans lequel le premier microphone (101 ; 201) est conçu pour détecter un correspondant proche afin de produire le premier signal, et dans lequel le haut-parleur (122 ; 209) transmet un signal acoustique provenant d'un correspondant distant reçu sur un réseau de communication.

9. Procédé de suppression de la distorsion non linéaire, comprenant :
la détection d'un premier signal acoustique au niveau d'un premier microphone (101 ; 201) éloigné d'un haut-parleur (122 ; 209) d'un ensemble haut-parleur, dans lequel le microphone (101 ; 201) est positionné à l'extérieur d'une cavité arrière d'une enceinte de haut-parleur de l'ensemble haut-parleur ;
la détection d'un second signal acoustique au niveau du haut-parleur (122 ; 209) qui contient une distorsion non linéaire du haut-parleur, dans lequel la détection du second signal acoustique au niveau du haut-parleur (122 ; 209) comporte la détection du second signal acoustique dans la cavité arrière du haut-parleur (122 ; 209) en utilisant un second microphone (124), qui est un microphone haute pression qui est positionné à l'intérieur de la cavité arrière du haut-parleur (122 ; 209) à l'intérieur de l'enceinte de haut-parleur ;
la réception, par un annuleur (105), du premier signal acoustique et du second signal acoustique, dans lequel le second signal acoustique est utilisé comme signal d'annuleur de signal de référence pour réduire la distorsion non linéaire du haut-parleur en tant que partie du premier signal pour produire un signal de sortie ; et
la suppression de tout écho détecté par le microphone (101 ; 201) éloigné du haut-parleur (122 ; 209) en soustrayant, par un circuit d'addition de l'annuleur (105), une estimation d'écho du premier signal, dans lequel l'estimation d'écho est produite en filtrant, à l'aide d'un filtre adaptatif, le second signal acoustique,
dans lequel l'annuleur (105) comporte en outre un premier état sans signal sortant du haut-parleur (122 ; 209) et un signal de non-conversation étant détecté par le premier microphone (101 ; 201), un deuxième état sans signal sortant du haut-parleur (122 ; 209) et un signal de conversation est détecté par le premier microphone (101 ; 201), un troisième état avec la sortie acoustique provenant du haut-parleur (122 ; 209) et un signal de conversation étant détecté par le premier microphone (122 ; 209), et un quatrième état avec la sortie acoustique provenant du haut-parleur (122 ; 209) et le signal de non-conversation étant détecté par le premier microphone (101 ; 201), et
dans lequel le procédé comprend en outre :
l'apprentissage de l'annuleur (105) dans le quatrième état pour corriger la distorsion linéaire et la distorsion non linéaire.

10. Procédé selon la revendication 9, dans lequel la détection du second signal acoustique comporte l'apprentissage d'un filtre d'écho (210) et d'une matrice de blocage (203) de l'annuleur (105) en utilisant le second signal acoustique détecté depuis l'intérieur d'une enceinte de haut-parleur ; et l'amélioration du signal de sortie en utilisant le filtre d'écho (210) et la matrice de blocage (203) pour supprimer l'écho, y compris la distorsion non linéaire du haut-parleur, du premier signal acoustique détecté.

11. Procédé selon la revendication 10, comprenant en outre :
l'apprentissage du filtre d'écho acoustique en utilisant le second signal acoustique détecté depuis l'intérieur de l'enceinte de haut-parleur (122 ; 209) comme signal d'apprentissage ;
le filtrage d'un signal de haut-parleur en utilisant le filtre d'écho (210) pour produire un signal filtré,
l'addition du signal filtré avec le premier signal acoustique détecté après le filtrage avec un banc de filtres d'analyse pour produire un signal additionné sans écho,
l'application d'une matrice de blocage (203) au signal additionné pour produire une sortie de la matrice de blocage ;
l'application d'un dispositif de formation de faisceaux (204) au signal additionné et à la sortie de la matrice de blocage pour produire une sortie du dispositif de formation de faisceaux ;
l'estimation de la puissance de bruit en utilisant le signal additionné, la sortie de la matrice de blocage et la sortie du dispositif de formation de faisceaux ;
le post-filtrage de la sortie du dispositif de formation de faisceaux en utilisant la puissance de bruit estimée pour produire un signal post-filtré ; et
l'application d'un filtre de synthèse au signal post-filtre pour produire un signal de sortie amélioré.
